# EUROPEAN PATENT APPLICATION

(11) **EP 2 741 217 A1**
(43) Date of publication of application: **11.06.2014**
(21) Application number: 12306512.0
(22) Date of filing: 04.12.2012
(51) Int. Cl.: G06F 17/30

(54) **Database synchronization**

(71) Applicant: Thomson Licensing, 92130 Issy-les-Moulineaux (FR)
(72) Inventor: Baron, Guillaume, 92443 Issy les Moulineaux cedex (FR); Korikov, Andrei, 92443 Issy les Moulineaux cedex (FR)
(74) Representative: Huchet, Anne

(57) **Abstract**

Method for synchronizing a slave database (26) to a master database (16), the data of each database (16, 26) being organized as a list containing a plurality of entries (ES₁, ES₂, ES₃, ES₄, EM₁, EM₂, EM₃, EM₄) ordered according to their entry order in said database (16, 26) so that the most recent entry (ES₄, EM₄) is at the end of the list whereas the oldest entry (ES1, EM₁) is at the beginning of the list, comprising the steps of:
- receiving a notification of a change in the master database (16); and
- applying the notified change to the slave database (26).

## Description

### FIELD OF THE INVENTION

The present invention generally relates to the field of databases.

More particularly, the invention deals with the synchronization of a slave database to a master database in order to reflect the changes made on the master database in the slave database. Thus, the invention concerns a method, a master device, a slave device and a terminal for synchronizing a slave database to a master database. It also concerns a computer program implementing the method of the invention.

### BACKGROUND OF THE INVENTION

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

It is well-known to update the data of a slave database of a handset of a cordless terminal, by replication of the master database of the base station of the terminal.

By this replication technique, even though only one entry of the master database has been changed, all the data of this master database are transferred to the terminal. Obviously, this process may cause not only a loss of time but may also generate errors.

A standardized synchronization solution named SyncML (Synchronization Markup Language) avoiding to replicate all the data already exists. SyncML is most commonly thought of as a method to synchronize contact and calendar information between some type of handheld device and a computer, such as between a mobile phone and a personal computer. It also includes support for push email, providing a standard protocol alternative to proprietary solutions.

In the context of cordless phone systems and particularly of a DECT (Digital Enhanced Cordless Telecommunications) system, SyncML is used to synchronize the data of the base station with a server located remotely from the base station, particularly outside the home.

However, SyncML is computationally greedy so that it would be very difficult to use it locally for the synchronization of the data of the handset with the data of the base station.

### SUMMARY OF THE INVENTION

The present invention proposes a solution for improving the situation.

Accordingly, the present invention provides a method for synchronizing a slave database to a master database, the data of each database being organized as a list containing a plurality of entries ordered according to their entry order in said database so that the most recent entry is at the end of the list whereas the oldest entry is at the beginning of the list, comprising the steps of :
- receiving a notification of a change in the master database ; and
- applying the notified change to the slave database.

The method of the present invention thus uses the principle of a FIFO (First In First Out) stack to synchronize the databases. According to this principle, if an entry is added to the master database when this master database is full, the oldest entry in said master database is removed. Thus, the deleted data are often located at the beginning of the list.

By using a FIFO based algorithm, the method of the invention is naturally adapted for the synchronization of the entries of a handset of a cordless terminal with the entries of its base station, such as the phone book, the call lists, the SMS (Short Message Service), etc. In this case, in fact, old data are often deleted when the number of entries is maximal.

Advantageously, the step of applying the notified change comprises:
- if an entry is deleted in the master database, removing the deleted entry in the slave database ;
- if an entry is added to the master database, adding the new entry to the slave database ; and
- if an entry is updated in the master database, updating said entry in the slave database.

The ordering of the data according to the present invention makes easier the removal of the obsolete entries and the adding of new entries. Thus, the exchanged data are limited and there's no need for a large storing size.

Advantageously,
- the master database is characterized by a master version number, a master first identifier of its first entry and a master last identifier of its last entry; and
- the slave database is characterized by a slave version number, a slave first identifier of its first entry and a slave last identifier of its last entry.

These characteristics are used to compare the states of the databases, by comparing the master version number with the slave version number and/or the master first identifier with the slave first identifier and/or the master last identifier with the slave last identifier.

Preferably, the method comprises a step of incrementing the master version number when an entry of the master database has been added and/or modified and/or removed.

In a preferred embodiment, the method comprises a step of maintaining a diary containing a historical of the master version number.

Advantageously, the diary comprises an indication of the change that occurred in the master database, preferably only if such change is an update or a removal of an entry of said master database.

Thus, the diary does not store all the changes operated in the master database, which permits to have a diary of limited size.

Advantageously, each entry of each database is characterized by a version number.

This version number permits to the slave database to detect a modification of the entry.

The invention further provides a master device comprising :
- a master memory for storing a master database;
- a master organizer for organizing entries of the master database as a list and ordering them according to their entry order in said database so that the most recent entry is at the end of the list whereas the oldest entry is at the beginning of the list; and
- a notifying module for notifying to a slave device a change in said master database.

Advantageously, the master device is a base station of a cordless terminal, such as a DECT terminal and the master database is a phone book or a list of SMS or a call list.

The invention also provides a slave device comprising:
- a slave memory for storing a slave database;
- a slave organizer for organizing entries of the slave database as a list and ordering them according to their entry order in said database so that the most recent entry is at the end of the list whereas the oldest entry is at the beginning of the list;
- a receiver module for receiving a notification of a change in a master database; and
- a synchronization module for applying the notified change to the slave database.

Advantageously, the slave device is a handset of a cordless terminal.

For instance, such handset may be a tablet of a cordless DECT terminal.

Advantageously, the slave database is a phone book or a list of SMS or a call list.

The invention further provides a terminal comprising the master and the slave devices of the invention.

Advantageously, the terminal is a DECT terminal, wherein the master device is a base station and the slave device is a handset of said terminal.

The method according to the invention may be implemented in software on a programmable apparatus. It may be implemented solely in hardware or in software, or in a combination thereof.

Since the present invention can be implemented in software, the present invention can be embodied as computer readable code for provision to a programmable apparatus on any suitable carrier medium. A carrier medium may comprise a storage medium such as a floppy disk, a CD-ROM, a hard disk drive, a magnetic tape device or a solid state memory device and the like.

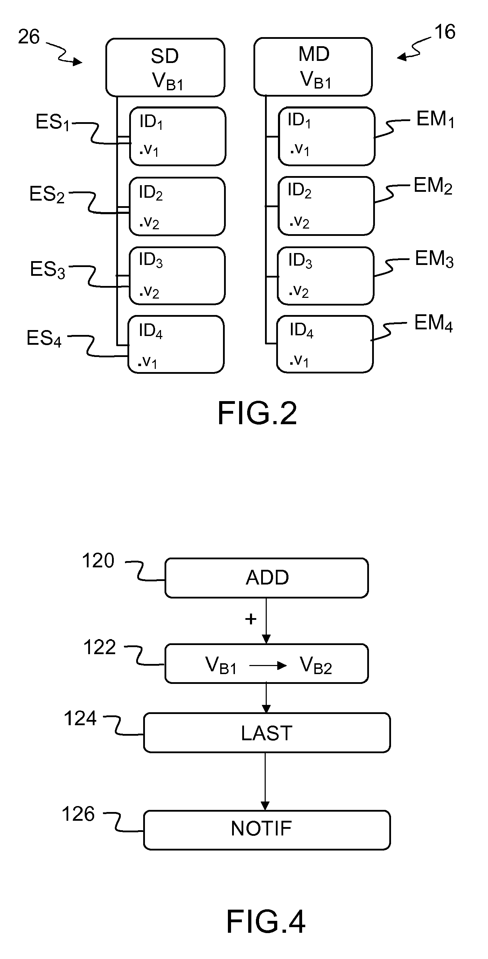

The invention thus provides a computer-readable program comprising computer-executable instructions to enable a computer to perform the method of the invention. The diagrams of figures 4 to 8 illustrate examples of the general algorithm for such computer program.

### BRIEF DESCRIPTION OF THE DRAWINGS

The present invention is illustrated by way of examples, and not by way of limitation, in the figures of the accompanying drawings, in which like reference numerals refer to similar elements and in which:
- Figure 1 is a schematic view of a terminal according to an embodiment of the invention ;
- Figure 2 represents a master database and a slave database ordered as a FIFO list, according to an embodiment of the invention;
- Figure 3 illustrates the synchronization steps when an update of the databases is initiated by the slave device, according to an embodiment of the invention;
- Figure 4 is a flowchart showing the case of a new entry addition to the master database, according to an embodiment of the invention ;
- Figure 5 is a flowchart showing the case of an entry removal from the master database, according to an embodiment of the invention ;
- Figure 6 is a flowchart showing the case of an entry modification in the master database, according to an embodiment of the invention ;
- Figure 7 is a flowchart showing the synchronization steps when the master version number is modified, according to an embodiment of the invention; and
- Figure 8 is a flowchart showing the exchange of messages between the master and the slave databases when the master version number is modified, according to an embodiment of the invention.

### DETAILED DESCRIPTION OF PREFERRED EMBODIMENTS

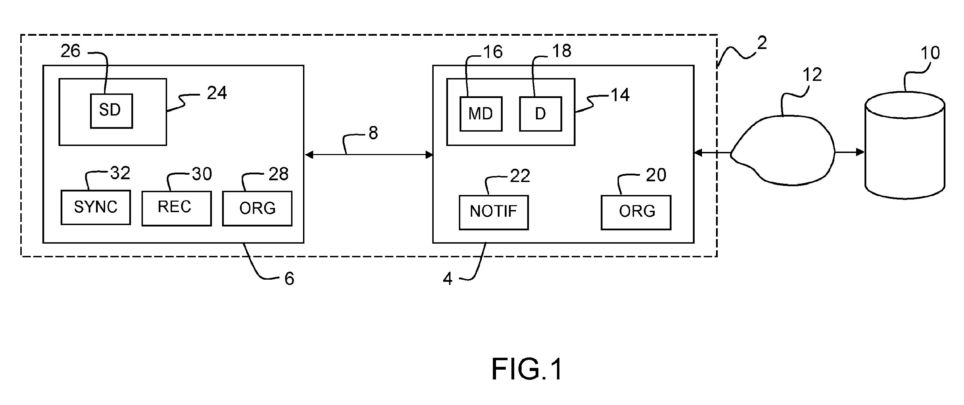

Referring to Figure 1, there is shown therein a schematic view of a cordless terminal 2 according to a preferred embodiment of the invention.

The terminal 2 comprises a base station 4 and a handset 6 connected though a low rate radio link 8, for example according to the DECT standard.

The base station 4 is further linked to a remote server 10, such as an operator server, through a network 12, such as internet.

The base station 4 comprises a master memory 14 for storing a master database 16 and a diary 18. It also comprises a master organizer 20, for organizing the data of the master database as a FIFO list of entries by ordering these entries of the master database 16 according to their entry order in said database so that the most recent entry is at the end of the list whereas the oldest entry is at the beginning of the list, and a notification module 22.

The data of the master database 16 comprise, for instance, a phone book, call lists, messages such as SMS (Short Message Service), etc.

The data of the diary 18 comprise a historical of at least a part of the changes occurred to entries of the master database 16.

The handset 6 comprises a slave memory 24 for storing a slave database 26. It also comprises a slave organizer 28, for organizing the data of the slave database as a FIFO list of entries by ordering these entries of the slave database 16 according to their entry order in said database so that the most recent entry is at the end of the list whereas the oldest entry is at the beginning of the list, a receiver module 30 for receiving a notification of a change in the master database 16 and a synchronization module 32 for applying the notified change to the slave database 26.

Figure 2 shows an example of a state of the databases 16, 26 wherein these databases are synchronized and both characterized by a same version number, i.e. the slave database 26 has a slave version number equal to the master version number V_{B1} of the master database 16.

The master database 16 comprises entries EM₁, EM₂, EM₃, EM₄, characterized by identifiers ID₁, ID₂, ID₃, ID₄ and version numbers v₁, v₂, v₂, v₁, respectively. The entries EM₁, EM₂, EM₃, EM₄ are ordered according to their entry order in the master database 16. Thus, EM₁ is the oldest entry and EM₄ is the newest one. The first identifier of the master database 16, called first master identifier, is thus equal to 1 whereas the last identifier of the master database 16, called last master identifier, is equal to 4.

The slave database 26 comprises entries ES₁, ES₂, ES₃, ES₄. As the slave database 26 is synchronized with the master database 16, they have the same entries. Thus ES₁, ES₂, ES₃, ES₄ are characterized by the identifiers ID₁, ID₂, ID₃, ID₄ and the version numbers v₁, v₂, v₂, v₁, respectively. The entries ES₁, ES₂, ES₃, ES₄ are ordered according to their entry order in the slave database 26. Thus, ES₁ is the oldest entry and ES₄ is the newest one. The first identifier of the slave database 26, called first slave identifier, is thus equal to 1 whereas the last identifier of the slave database 16, called last slave identifier, is equal to 4.

Preferably, the version number of an entry is incremented when there's a change in the entry itself. For example, in the case of a phone book comprising a list of contacts, the version number is incremented when the number and/or the name and/or the address of the contact, corresponding to the entry, is changed.

In the example represented here, the entries EM₁ and EM₄, having the version number v₁, have not been changed since their creation while the entries EM₂ and EM₃ have been changed once.

More particularly, the historical, stored in the diary 18, is arranged in the form of a table comprising rows, each row containing at least the master version number, the identifier of the concerned changed entry and the nature of the change. Preferably, in order to have a small size historical, only the update or the removal of an entry are registered in the historical.

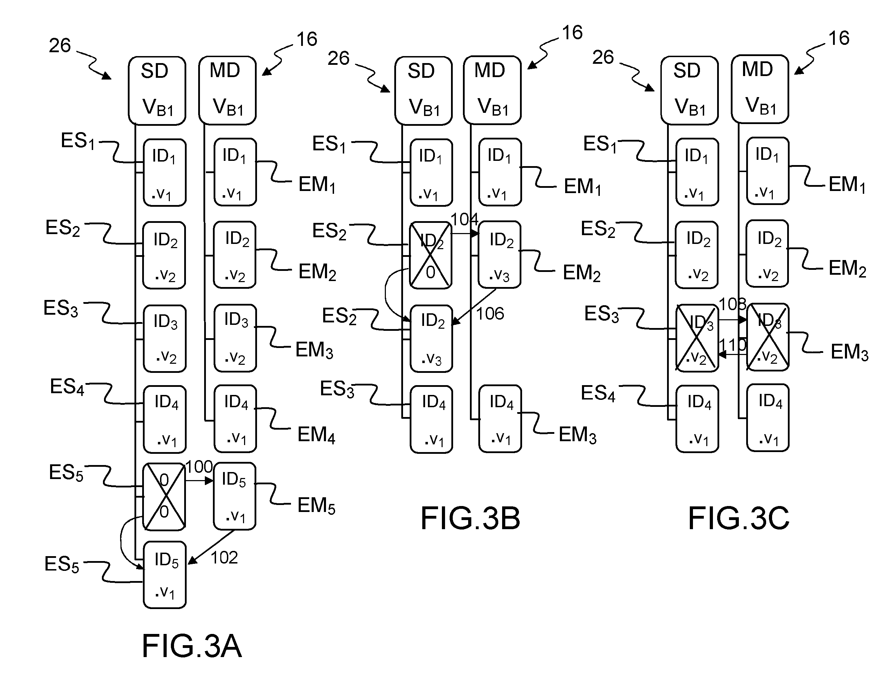

Figure 3, which is split into Figures 3A, 3B and 3C, shows the evolution of the databases 16, 26 when a change in said databases is initiated by the handset 6.

The flowchart of Figure 3A shows the case of an addition of a new entry ES₅ in the slave database 26. This entry is added at the end of the list of entries, according to the FIFO principle. The entry ES₅ is firstly initialized to have an identifier and a version number both equal to zero.

When the base station 4 is informed, at step 100, about the addition of ES₅, for example when the handset 6 is locked to the base station 4, a new entry EM₅ is created in the master database 16 at the end of the list of entries according to the FIFO principle. The new entry EM₅ has an identifier ID₅ and a version number v₁ which are allocated by the base station 4 and transmitted, at step 102, to the handset 6 in order to update the characteristics of ES₅ which then become ID₅ and v₁.

The flowchart of Figure 3B shows the case of an update of an existing entry ES₂ in the slave database 26. The version number of ES₂ is firstly fixed, by the handset 6, to zero.

When the base station 4 is informed, at step 104, about the update of ES₂, for example when the handset 6 is locked to the base station 4, it increments the version number of EM₂ which then becomes v₃. This new version number is transmitted, at step 106, to the handset 6 in order to update the version number of ES₂ which then becomes v₃.

The flowchart of Figure 3C shows the case of a removal of an existing entry ES₃ in the slave database 26.

When the base station 4 is informed, at step 108, about the removal of ES₃, for example when the handset 6 is locked to the base station 4, it deletes EM₃ and notifies, at step 110, the handset 6.

Figure 4 illustrates the steps of a new entry addition to the master database 16, at the level of the base station 4.

At step 120, the base station 4 is informed of a request to add a new entry, for example made by a user of the terminal 2. It checks if the new entry already exists in the master database 16. If it already exists, the update ends and the user is informed.

If the entry does not exist, the base station 4 increments, at step 122, the master version number which then becomes V_{B2}.

Then, at step 124, the master organizer 20 adds the new entry at the last position in the master database 16, according to the FIFO principle. The notification module 22 informs, at step 126, the handset 6 about the change of the master version number.

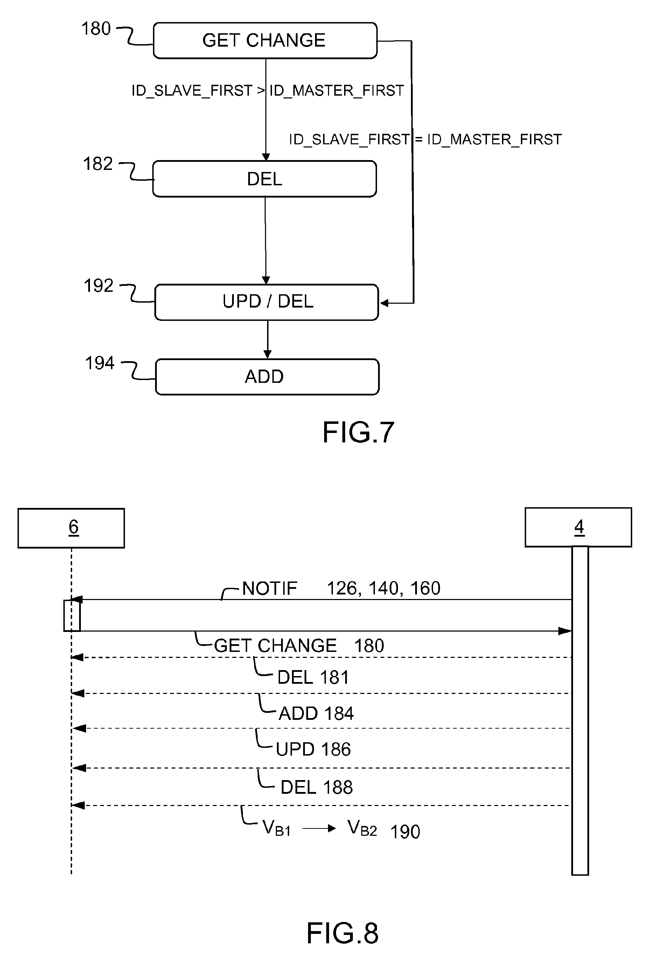

Then, synchronization steps to update accordingly the slave database 26 are performed. These steps will be described in the following, with reference to figures 7 and 8.

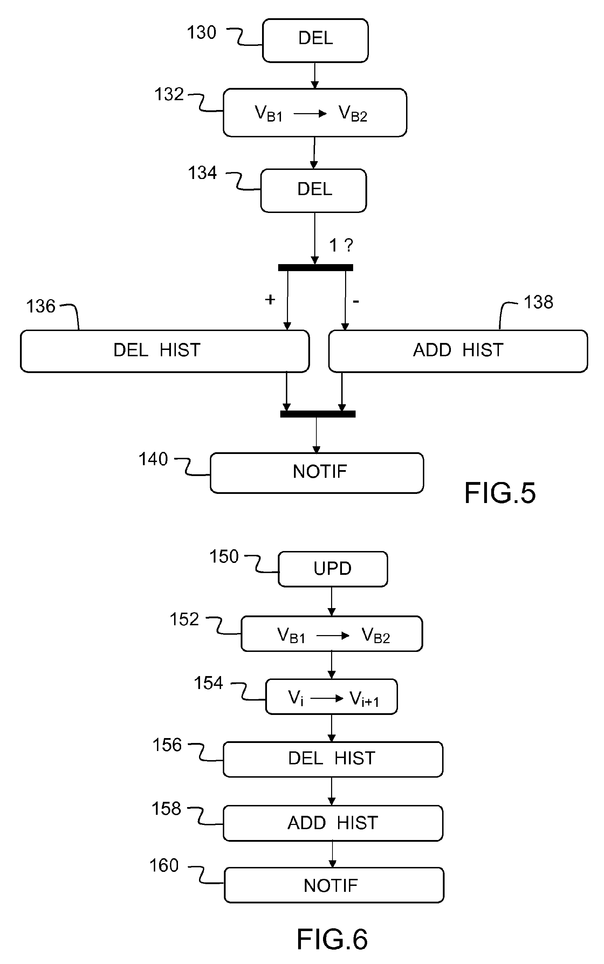

Figure 5 illustrates the steps of an entry removal from the master database 16, at the level of the base station 4.

At step 130, the base station 4 is informed of a request to delete an entry, for example made by a user of the terminal 2.

Then, the base station 4 increments, at step 132, the master version number which then becomes V_{B2}.

Then, at step 134, the master organizer 20 deletes the entry and checks if said entry is the first entry of the master database 16, i.e. if said entry is located at the first position.

If said entry is the first entry, the master organizer 20 deletes, at step 136, from the historical table all the rows related to entries having an identifier smaller than the new first identifier of the master database 16, i.e. it deletes all the events related to entries which are older than the deleted entry.

If said entry is not the first entry, the master organizer 20 adds, at step 138, in the historical table, a row registering the removal of the deleted entry associated with the new master version number.

The notification module 22 informs, at step 140, the handset 6 about the change of the master version number.

Then, synchronization steps to update accordingly the slave database 26 are performed. These steps will be described in the following, with reference to figures 7 and 8.

Figure 6 illustrates the steps of an entry update in the master database 16, at the level of the base station 4.

At step 150, the base station 4 is informed of a request to delete an entry, for example made by a user of the terminal 2.

Then, the base station 4 increments, at step 152, the master version number which then becomes V_{B2}.

Then, at step 154, the master organizer 20 updates the entry version number by incrementing this version number.

At step 156, the master organizer 20 deletes from the historical table all the rows related to the updated entry, i.e. in which there's the identifier of said entry.

At step 158, the master organizer 20 adds in the historical table, a row registering the update of the entry associated with the new master version number.

The notification module 22 informs, at step 160, the handset 6 about the change of the master version number.

Then, synchronization steps for updating accordingly the slave database 26 are performed. These steps will be described in the following, with reference to figures 7 and 8.

Figure 7 illustrates the steps performed by the handset 6, after the receipt by the receiver module 30 of a notification of a change of the master version number.

At step 180, the synchronization module 32 of the handset 6 transmits to the base station 4 a request to get a list of the changes that occurred to the master database 16. It incorporates in this request the first slave identifier, the last slave identifier and the slave version number.

After having received this request, the base station 4 compares the first slave identifier with the first master identifier.

If the first slave identifier is greater than the first master identifier, then the base station 4 instructs, at step 181 (figure 8) the handset 6 to delete the entries having an identifier smaller then the first master identifier. Then, the synchronization module 32 deletes, at step 182, in the slave database 26, said entries having an identifier smaller then the first master identifier.

If the first slave identifier is equal to the first master identifier, there are several cases.

If the last master identifier is greater than the last slave identifier, then the base station 4 instructs, at step 184 (figure 8) the handset 6 to add the entry or entries of the master database 16 having an identifier greater than the last slave identifier.

If the last master identifier is equal to the last slave identifier but the master version number is greater than the slave version number, there are two cases.

The first case corresponds to an update of one or several entries in the master database 16 since the slave version number. In this case, the base station 4 instructs, at step 186 (figure 8) the handset 6 to update the changed entry or entries since the slave version number.

The second case corresponds to a removal of one or several entries, different from the first entry, in the master database 16 since the slave version number. In this case, the base station 4 instructs, at step 188 (figure 8) the handset 6 to delete the deleted entry or entries since the slave version number.

Furthermore, in all the cases where the slave version number is different from the master version number, the base station 4 instructs, at step 190 (figure 8) the handset 6 to update the slave version number to the master version number.

After having received one or several of the instructions 184, 186, 188, the handset 6, updates, at step 192, the slave version number. If the instruction is that of step 186, which is an update of one or several entries, the synchronization module 32 updates said entry or entries in the slave database 26. If the instruction is that of step 188, which is a removal of one or several entries, the synchronization module 32 deletes said entry or entries from the slave database 26.

If the instruction is that of step 184, which is an addition of one or several entries having an identifier greater than the last slave identifier, the synchronization module 32 adds, at step 194 said entries at the end of the list of entries.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention is not limited to the particular embodiments disclosed, but that the invention includes all embodiments falling within the scope of the appended claims.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed to be a reference to the plural and vice versa.

A person skilled in the art will readily appreciate that various parameters disclosed in the description may be modified and that various embodiments disclosed and/or claimed may be combined without departing from the scope of the invention.

Thus, even if the above description focused on the case of a terminal comprising a base station and a handset, it can be advantageously applied to the synchronization of the slave database of any slave device with the master database of the associated master device.

Besides, the invention can be advantageously applied to the synchronization of more than one slave database with a master database.

Furthermore, while the invention has been used in the above description for synchronizing the databases of the handset 6 and the base station 4, it may be used to synchronize the databases of the base station 4 and the remote server 10.

## Claims

1. Method for synchronizing a slave database (26) to a master database (16), the data of each database (16, 26) being organized as a list containing a plurality of entries (ES₁, ES₂, ES₃, ES₄, EM₁, EM₂, EM₃, EM₄) ordered according to their entry order in said database (16, 26) so that the most recent entry (ES₄, EM₄) is at the end of the list whereas the oldest entry (ES1, EM₁) is at the beginning of the list, comprising the steps of :
- receiving (126, 140, 160) a notification of a change in the master database (16); and
- applying (192, 194) the notified change to the slave database (26).

2. Method of claim 1, wherein the step of applying the notified change comprises:
- if an entry is deleted (134) in the master database (16), removing (182, 192) the deleted entry in the slave database (26);
- if an entry is added (124) to the master database (16), adding (194) the new entry to the slave database (26); and
- if an entry is updated (154) in the master database (16), updating (192) said entry in the slave database (26).

3. Method of claim 1 or 2, wherein
- the master database (16) is **characterized by** a master version number, a master first identifier of its first entry and a master last identifier of its last entry; and
- the slave database (26) is **characterized by** a slave version number, a slave first identifier of its first entry and a slave last identifier of its last entry.

4. Method of claim 3, comprising a step of incrementing (122, 132, 152) the master version number when an entry of the master database (16) has been added and/or modified and/or removed.

5. Method of claim 3 or 4, comprising a step of maintaining (136, 138, 158) a diary (18) containing a historical of the master version number.

6. Method of claim 5, wherein the diary (18) comprises an indication of the change that occurred in the master database (16), preferably only if such change is an update (154) or a removal (134) of an entry of said master database (16).

7. Method of any of claims 1 to 6, wherein each entry (ES₁, ES₂, ES₃, ES₄, EM₁, EM₂, EM₃, EM₄) of each database (16, 26) is **characterized by** a version number.

8. Master device (4) comprising :
- a master memory (14) for storing a master database (16);
- a master organizer (20) for organizing entries (EM₁, EM₂, EM₃, EM₄) of the master database (16) as a list and ordering them according to their entry order in said database (16) so that the most recent entry (EM₄) is at the end of the list whereas the oldest entry (EM₁) is at the beginning of the list; and
- a notifying module (22) for notifying to a slave device (6) a change in said master database (16).

9. Slave device (6) comprising:
- a slave memory (24) for storing a slave database (26);
- a slave organizer (28) for organizing entries (ES₁, ES₂, ES₃, ES₄) of the slave database (26) as a list and ordering them according to their entry order in said database (26) so that the most recent entry (ES₄) is at the end of the list whereas the oldest entry (ES₁) is at the beginning of the list;
- a receiver module (30) for receiving a notification of a change in a master database (16) ; and
- a synchronization module (32) for applying the notified change to the slave database (26).

10. Slave device of claim 9, wherein said slave device (6) is a handset of a cordless terminal (2).

11. Slave device of claims 9 or 10, wherein the slave database (26) is a phone book or a list of SMS or a call list.

12. Terminal (2) comprising the master (4) and the slave (6) devices of claims 8 and 9.

13. Terminal (2) of claim 12, said terminal being a DECT terminal, wherein the master device (4) is a base station and the slave device (6) is a handset of said terminal.

14. Computer-readable program comprising computer-executable instructions to enable a computer to perform the method of any of claims 1 to 7.
